# EUROPÄISCHE PATENTSCHRIFT

(11) **EP 2 609 365 B1**
(45) Veröffentlichungstag und Bekanntmachung des Hinweises auf die Patenterteilung: **08.07.2015**
(21) Anmeldenummer: 11767645.2
(22) Anmeldetag: 26.08.2011
(51) Int. Cl.: F21V 23/04

(54) **LEUCHTMITTEL, INSBESONDERE ZUM BETRIEB IN FASSUNGEN FÜR LEUCHTSTOFFLAMPEN**
LUMINAIRES, ESPECIALLY LUMINAIRES TO BE OPERATED IN LAMP HOLDERS FOR FLUORESCENT LAMPS
LUMINAIRE UTILISABLE NOTAMMENT DANS DES SUPPORTS POUR LAMPES FLUORESCENTES

(30) Priorität: 26.08.2010 DE 102010035624
(43) Veröffentlichungstag der Anmeldung: 03.07.2013
(73) Patentinhaber: Fraunhofer-Gesellschaft zur Förderung der angewandten Forschung e.V., 80686 München (DE)
(72) Erfinder: ÖZGÜC, Rasit, 46535 Dinslaken (DE); HEIL, Volker, 46145 Oberhausen (DE); PIONTEK, Udo, 46242 Bottrop (DE)
(86) Internationale Anmeldenummer: PCT/EP2011/064757
(87) Internationale Veröffentlichungsnummer: WO 2012/025626

(56) Entgegenhaltungen:
- WO-A1-2009/067074
- WO-A1-2010/069983
- CN-A- 101 737 664
- DE-C- 891 108
- DE-U1-202010 008 186
- FR-A- 1 369 263
- JP-A- 2001 043 945
- JP-A- 2010 192 229
- US-A- 4 211 958

## Beschreibung

Die Erfindung betrifft Leuchtmittel, insbesondere zum Betrieb in Fassungen für Leuchtstofflampen. Bei der Montage oder Demontage eines Leuchtstoffmittels in bzw. aus der korrespondierenden Fassung kann der Benutzer, sofern die Fassung nicht spannungsfrei geschaltet ist, einen Stromschlag an einem freiliegenden Kontakt erleiden. Bei Leuchtmitteln mit zwei gegenüber angeordneten Kontaktabschnitten zum Einsetzen in entsprechende Fassungssockel einer Lampe kann dies dadurch hervorgerufen werden, dass nur einer von zwei Kontaktabschnitten mit dem entsprechenden Fassungssockel verbunden ist. Ein Stromschlag ist aber auch an einem einzelnen Kontaktabschnitt möglich, wenn dieser wenigstens einen zugänglichen sowie einen an die Spannungsquelle angeschlossenen Kontakt aufweist. Es handelt sich dabei um eine sogenannte "seitenimmanente" Spannungsverschleppung.

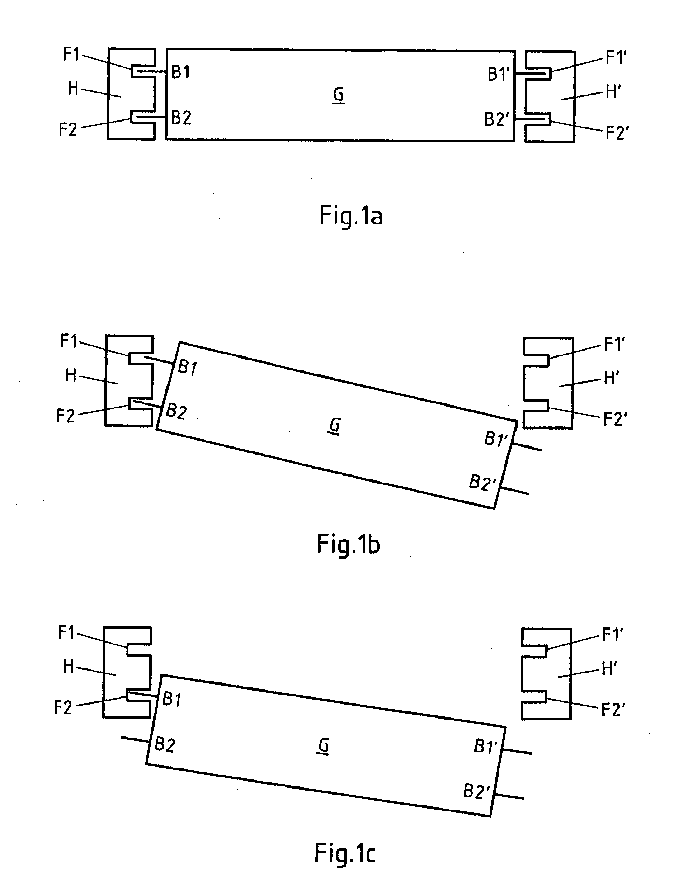

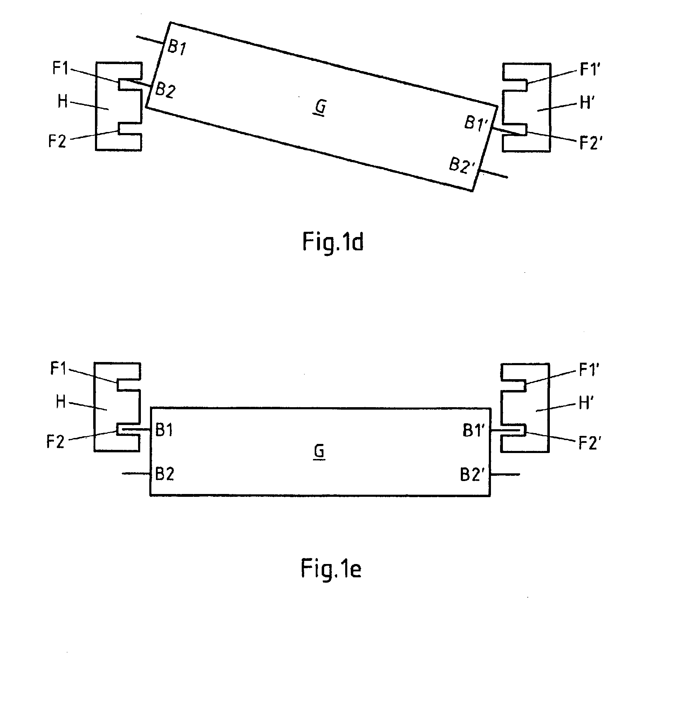

Das in der Abb. 1.a bis 1.e dargestellte Leuchtmittel besitzt neben einer Leuchteinheit G die Kontaktabschnitte H und H', die wiederum Kontakte B1/B2 bzw. B1'/B2' aufweisen. H und H' sind die beiden Fassungsseiten mit den Fassungskontakten F1/F2 und F1'/F2'.

In der Abb. 1.a ist das Leuchtmittel im korrekt montierten Fall dargestellt, während in Abb. 1.b, in der ein Fall dargestellt ist, in dem ein Stromschlag an einem Kontaktabschnitt B1'/B2' erfolgen kann, weil ein anderer Kontaktabschnitt B1/B2 an die Spannungsquelle angeschlossen ist. Dies ist auch bei dem in der Abb. 1.c dargestellten Fall möglich. Allerdings kann von B1 auch nach B2 Spannung anliegen. Die Abb. 1.d und 1.e stellen zwei Fälle dar, bei denen beidseitig Spannung von einem zum anderen Kontakt des gleichen Kontaktabschnitts, d.h. der gleichen Seite, "seitenimmanent" durchgeleitet werden kann.

Der Erfindung liegt daher die Aufgabe zugrunde, ein Leuchtmittel anzugeben, das Stromschläge beim Einsetzen von Leuchtmitteln, etwa in Leuchtstofflampenfassungen, vermeiden und im in die Fassung eingebauten Zustand problemlos betrieben werden kann.

Diese Aufgabe ist durch die nachfolgend näher beschriebene Erfindung dadurch gelöst, dass ein Kontaktabschnitt zum Einsetzen in einen Fassungssockel, umfassend zwei Kontaktstifte und eine mittig zwischen den Kontaktstiften angeordnete Zentriervorrichtung zum Zentrieren des Leuchtmittels in der Fassung, vorgesehen ist und dass die Zentriervorrichtung zum Betätigen eines Schalters oder einer Schutzvorrichtung um eine Hauptachse des Leuchtmittels drehbar ist.

Wenn das beschriebene Leuchtmittel beispielsweise in eine gewöhnliche Fassung zum Betrieb von Leuchtstofflampen eingesetzt wird, wird die Zentriervorrichtung zwangsweise gedreht und damit ein Schalter oder eine andere Schutzvorrichtung zur Vermeidung einer Spannungsverschleppung zwangsweise geschaltet. Dieses Zwangsschalten beim Einsetzen und der Inbetriebnahmen des Leuchtmittels kann genutzt werden, um das Leuchtmittel in die gewünschten Schaltzustände zu bringen, etwa um den Benutzer vor einer Spannungsverschleppung bzw. einem Stromschlag zu schützen.

Bei einer ersten Ausgestaltung des Leuchtmittels kann die Zentriervorrichtung mit dem Schalter oder der Schutzvorrichtung verbunden sein, wobei der Schalter oder die Schutzvorrichtung vorzugsweise eine seitenimmanente Spannungsverschleppung und/oder eine Spannungsverschleppung zwischen zwei Kontaktabschnitten verhindernd ausgebildet ist. Dies bildet eine sehr zuverlässige und konstruktiv einfache Lösung.

Alternativ oder zusätzlich kann die Schutzvorrichtung einen, vorzugsweise mechanisch betätigten, Schalter aufweisen. Der Schalter sorgt dabei etwa für eine hohe Zuverlässigkeit der Schutzvorrichtung. Mechanische Schalter sind dabei besonders zuverlässig und konstruktiv einfach vorzusehen.

Eine konstruktiv einfache Lösung kann alternativ oder zusätzlich bereitgestellt werden, wenn der Schalter durch Drehung der Zentriervorrichtung um die Längsachse des Leuchtmittels betätigt wird.

Bevorzugt ist es, wenn der Schalter durch Drehung der Zentriervorrichtung um etwa 90° betätigt wird, insbesondere wenn eine Drehung des Leuchtmittels um wenigstens 90° erfolgen muss, um dieses in die Fassung einzusetzen und in Betrieb zu nehmen.

Bei einer effektiven und konstruktiv einfachen Ausgestaltung kann der Schalter als zweipoliger Schalter ausgebildet sein. Dieser kann einfach oder zweifach zweipolig ausgeführt sein. Ferner kann pro Kontaktabschnitt wenigstens ein solcher Schalter vorgesehen sein.

Um automatisch den Ursprungszustand wiederherzustellen, wenn das Leuchtmittel wieder aus der Fassung entnommen wird, etwa für ein erneutes Einsetzen in eine Fassung, kann der Schalter selbstrückstellend ausgebildet sein.

Eine sichere Inbetriebnahme ohne Spannungsverschleppung kann erreicht werden, wenn der Schalter durch Drehung der Zentriervorrichtung zur Spannungsversorgung einer Leuchteinheit des Leuchtmittels geschlossen wird.

Etwa aus energetischer Sicht kann es bevorzugt sein, wenn als Leuchteinheit des Leuchtmittels Leuchtdioden (LED) vorgesehen sind. Die LED können mit oder ohne Vorschalttechnik (LED-Treiber) vorgesehen sein.

Als Schalter wird vorliegend auch ein, beispielsweise einfaches oder zweifaches, Drehpotentiometer angesehen, das durch Drehen der Zentriervorrichtung zwischen einer hochohmigen Stellung und einer niederohmigen Stellung verstellt wird. In der hochohmigen Stellung wirkt das Potentiometer als Schutz gegen Spannungsverschleppung. Im eingebauten Zustand des Leuchtmittels ist zur Verringerung von Verlusten der Potentiometer niederohmig eingestellt. Der hochohmige Widerstand kann in der Größenordnung Megaohm liegen, während der niederohmige Widerstand eine, vorzugsweise mehrere, Größenordnungen darunter liegt.

Die Erfindung betrifft dabei jedoch grundsätzlich elektrische Leuchtmittel jeden Funktionsprinzips, die in einen oder mehrere Fassungssockel eingesetzt werden können und dabei mit mindestens zwei Kontakten an eine Stromversorgung angeschlossen werden. Dabei kann ein einziger elektrischer Kontakt an einem Kontaktabschnitt ausreichen, wenn an wenigstens einem weiteren Kontakt wenigstens ein weiterer elektrischer Kontakt vorgesehen ist. Wenn das Leuchtmittel aber beispielsweise als Ersatz eines anderen Typs Leuchtmittels, wie einer Leuchtstofflampe, betrieben wird, kann an wenigstens einem Kontaktabschnitt neben einem elektrisch leitenden Kontakt noch ein nicht elektrisch leitender oder nicht mit der Verschaltung der Leuchteinheit elektrisch verbundener Kontakt vorgesehen sein. Dieser Kontakt kann dann als Dummy-Kontakt fungieren, etwa um über den Dummy-Kontakt einen Kontaktabschnitt mit gewohnter Form oder mit einer bestimmten Form bereitzustellen oder um den Dummy-Kontakt zur mechanischen Befestigung des Leuchtmittels in der Fassung zu nutzen.

Leuchtmittel im Sinne dieser Erfindung sind alle elektrischen Leuchtmittel, insbesondere Leuchtmittel, die Leuchtdioden (LEDs), etwa in Form von konventioneller LED-Technik, SMD-LED-Technik, Kleinspannungs-LEDs, Niederspannungs-LEDs, z.B. 115V/230 V-LEDs, organischen Leuchtdioden OLEDs und/oder organischen Leuchttransistoren (Organic Light Emitting Transistor (OLET)) aufweisen. Die Leuchtmittel können ferner Gasentladungslampen, insbesondere Leuchtstoffröhren, Induktionslampen, Glühfadenlampen, Halogen-Xenon-Glühlampen, sonstige Halogen-Glühlampen, sonstige Energiesparlampen, Leuchtkondensatoren oder eine Kombination der genannten Leuchtmitteltypen sein.

Unabhängig von der Art der lichtemittierenden Leuchteinheit des Leuchtmittels können erfindungsgemäße Leuchtmittel solche sein, die mit zwei Kontakten in einem Fassungssockel angeschlossen werden. Hierunter zählen Leuchtmittel für Fassungen mit nur einem Fassungssockel sowie Leuchtmittel für Fassungen mit zwei oder mehreren Fassungssockeln, wobei jedoch nur ein Fassungssockel stromführend sein kann. Beispiele für den letztgenannten Fall sind Fassungen zur Aufnahme von Leuchtstoffröhren, die jedoch derart umverdrahtet sind, dass die Stromversorgung nur von einem der beiden Fassungssockel her erfolgt.

Es kann sich aber insbesondere auch um Leuchtmittel handeln, die mit jeweils zwei Kontakten in zwei Fassungssockeln angeschlossen werden. Die Fassungen können zur Aufnahme von Leuchtstoffröhren ausgelegt sein.

Grundsätzlich kommen auch solche Leuchtmittel in Frage, die in einem Fassungssockel oder mehreren Fassungssockeln eingesetzt werden, wobei mindestens ein Fassungssockel mindestens drei Kontakte aufweist.

Zusätzlich oder alternativ zu einem Schutz gegenüber einer seitenimmanenten Spannungsverschleppung kann das Leuchtmittel noch einen Schutz gegenüber einer Spannungsverschleppung zwischen zwei räumlich voneinander getrennten Kontaktabschnitten aufweisen, sofern das Leuchtmittel zwei voneinander räumlich getrennte Kontaktabschnitte aufweist.

Es werden nachfolgend verschiedene Lösungen der zuvor genannten Aufgabe beschrieben, die auf verschiedenen Schaltungen beruhen. Die Schaltungen werden an Beispielen erläutert. Die Schaltungen verschiedener Ausführungsbeispiele oder Teile davon können untereinander auch kombiniert werden, ohne dass alle möglichen Kombinationen nachfolgend angesprochen werden. Es ist gleichfalls möglich, nur Teile der in den Ausführungsbeispielen dargestellten Schaltungen vorzusehen. Etwa kann auf den Schutz gegenüber einer unerwünschten Spannungsdurchleitung von einem Kontaktabschnitt zu einem anderen Kontaktabschnitt verzichtet werden. Auch kann es ausreichen, nur einen Kontaktabschnitt gegenüber einer seitenimmanenten Spannungsverschleppung zu schützen. Dies kann daran liegen, dass bei einem nicht dargestellten Ausführungsbeispiel nur ein einziger Kontaktabschnitt vorgesehen ist. Dies ist aber nicht zwingend.

Dabei wird Bezug auf die Zeichnung genommen. Die Zeichnung zeigt
- Fig. 1a-e: an sich bekannte Leuchtmittel,
- Fig. 2a-c: Leuchtmittel mit Schutzschaltungen mit beidseitigen, zweipoligen Schaltern,
- Fig. 3a-d: Leuchtmittel mit Schutzschaltungen gegen eine kontaktabschnittübergreifende Spannungsverschleppung,
- Fig. 4a-d: Leuchtmittel mit Schutzschaltungen gegen eine Spannungsverschleppung,
- Fig. 5a-c: ein Leuchtmittel mit einem Kreuzschalter gegen eine Spannungsverschleppung,
- Fig. 6a: ein Leuchtmittel mit einer Schutzschaltung mit elektrisch/elektronisch betätigten Schaltern,
- Fig. 6b: ein Leuchtmittel mit 4 einzeln angesteuerten Ein-Aus-Schaltern,
- Fig. 6c: ein Leuchtmittel mit einer gegen über dem Leuchtmittel gemäß Fig. 6a vereinfachten Schaltung,
- Fig. 6d-e: ein Leuchtmittel mit einer Schutzschaltung mit elektronisch betätigten Schaltern für Leuchtmittel mit zwei unabhängigen lichterzeugenden Einheiten,
- Fig. 7: ein Leuchtmittel mit einer elektronischen Schutzschaltung gegen eine Spannungsverschleppung,
- Fig. 8: ein Leuchtmittel mit intrinsischen Halbleitern,
- Fig. 9a: ein Leuchtmittel mit einer Schutzschaltung mit einem elektronisch betätigten Schalter für Fassungen mit nur einem Sockel,
- Fig. 9b: ein Leuchtmittel mit einer Schutzschaltung mit einem elektronisch betätigten Schalter für Leuchtmittel für Fassungen mit zwei Sockeln, wobei nur ein Sockel stromführend ist,
- Fig. 9c-f: ein Leuchtmittel mit einem magnetisch oder thermisch betätigten Schalter,
- Fig. 10a-c: martktübliche Leuchtstofflampenfassungen,
- Fig. 11: ein Leuchtmittel mit einer mechanischen Vorrichtung zur Zentrierung des Leuchtmittels und zum Schutz vor seitenimmanenten Stromschlag,
- Fig. 12a: eine Skizze einer Fassung,
- Fig. 12b: eine Skizze einer Fassung mit eingeschobenem, aber noch nicht in die Endlage gedrehtem Leuchtmittel
- Fig. 12c: eine Skizze einer Fassung mit eingesetztem Leuchtmittel und geschlossenem Stromkreis,
- Fig. 12d: eine Skizze einer Fassung mit einem Leuchtmittel in blockierter Position,
- Fig. 12e-f: eine Skizze einer drehbaren, mechanischen, selbstrückstellenden Vorrichtung zum Betätigen einer Schutzvorrichtung,
- Fig. 13: ein Leuchtmittel mit sich selbst reaktivierender Isolation zum Schutz vor seitenimmanentem Stromschlag in Form einer Beschichtung,
- Fig. 14: ein Leuchtmittel mit sich selbst reaktivierender Isolation zum Schutz vor Stromschlag mit federbelasteten Kontaktstiften,
- Fig. 15a: ein Leuchtmittel mit sich selbst reaktivierender Isolation zum Schutz vor Stromschlag mit federbelasteten Kontaktstiften und Sollbruchstellen und
- Fig. 15b: das Leuchtmittel aus Fig. 15a einer aktivierten (oben) und einer an einer Sollbruchstelle deaktivierten Isolation (unten)

Schutzschaltungen mit mechanisch betätigten Schaltern:
Bei Schutzschaltungen mit Schaltern lässt sich beispielsweise die Gefahr des "seitenimmanenten Stromschlages" dadurch bannen, dass beide Kontakte einer Seite so ausgeschaltet werden, dass die elektrische Verbindung zwischen beiden Kontakten unterbrochen ist.

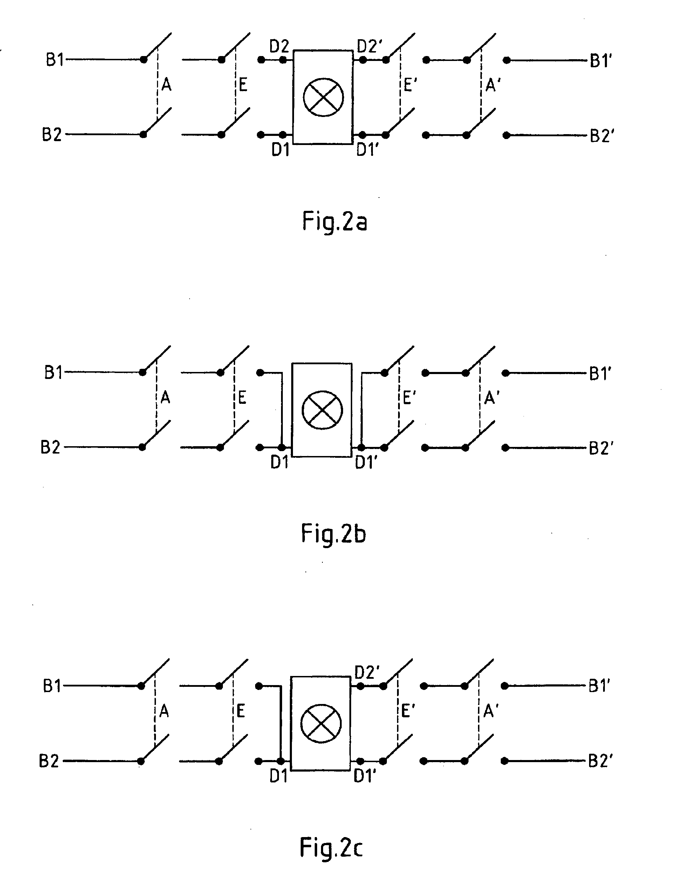

In der Fig. 2.a ist eine Schutzschaltung mit beidseitig jeweils zwei zweipoligen Schaltern A und E bzw. A' und E' dargestellt. Das Schalten beider Kontakte eines Kontaktabschnittes bietet sich auch an, wenn die eigentliche Leuchteneinheit mit umgebender Elektronik beidseitig nur einpolig angeschlossen werden muss, wie dies in Fig. 2.b dargestellt ist. Die Brücke zwischen den beiden Kontakten B1 und B2 bzw. B1' und B2' wird dabei erst nach den Schaltern, direkt vor der eigentlichen Leuchteneinheit mit umgebender Elektronik, ausgeführt. Diese Schaltung verhindert sicher auch "seitenimmanenten Stromschlag".

In der Fig. 2.c ist eine Mischform für spezielle Schaltungen dargestellt. Diese Schaltungsvariante lässt sich bei manuell betätigten Dreh- und/oder Kippschalten bzw. -tastern, bei automatisch beim Einbau zu betätigenden Kippschaltern bzw. - tastern, insbesondere aber auch bei magnetisch oder thermisch betätigten Schaltern, ausführen.

Ein mechanischer Berührungsschutz der Kontakte bietet hier nur Schutz gegenüber seitenimmanenter Spannungsverschleppung, wenn beide Kontakte jeder Seite individuell und unabhängig von dem anderen Kontakt der jeweiligen Seite abgesichert sind.

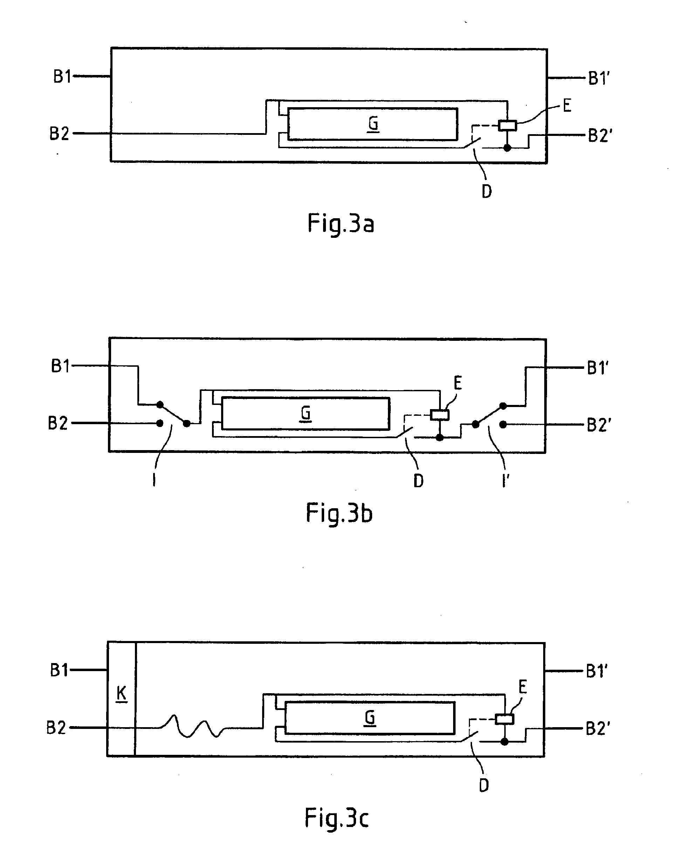

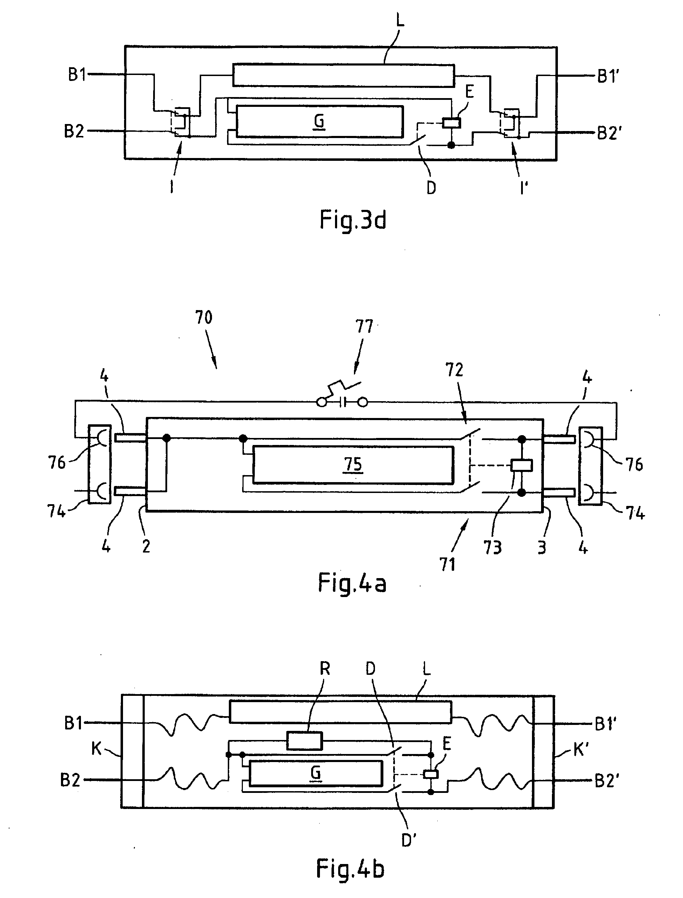

Um Schaltungen, bei denen beidseitig die Kontakte gebrückt werden, beidseitig gegen "seitenimmanenten Stromschlag" abzusichern, kommt es im einfachsten Fall in Frage, jeweils nur einen Kontakt jeder Seite zum Anschluss des Leuchtmittels und den jeweils anderen Kontakt nur als Halterung zu benutzen. Dies ist in Abb. 3.a dargestellt. Dieses Vorgehen setzt jedoch voraus, dass in der Fassung die Fassungskontakte in beiden Kontaktabschnitten auf der gleichen Seite mit dem Stromnetz (Phase bzw. Nullleiter) verbunden sind.

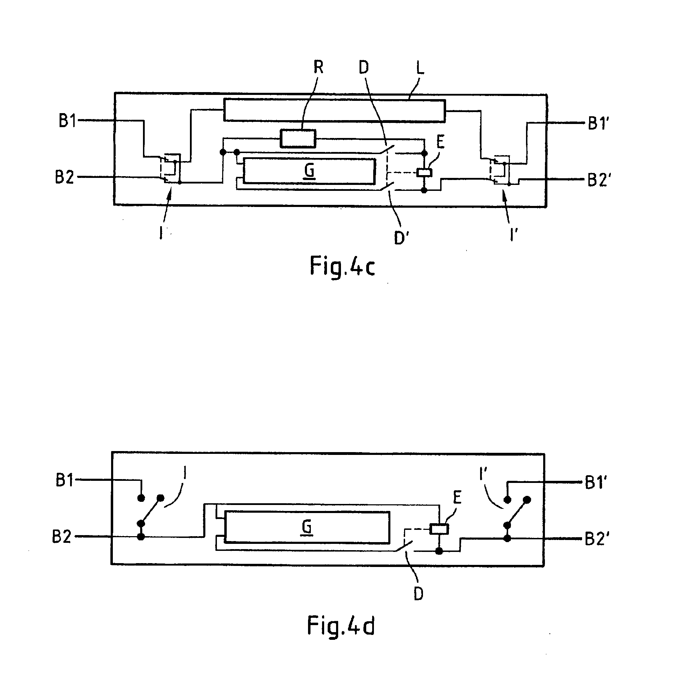

In den Fig. 3a, 3b, 3c, 3d, 4b, 4c und 4d sind Schutzschaltungen gegen eine kontaktabschnittübergreifende Spannungsverschleppung vorgesehen. Die Schaltungen weisen ein Sensorelement E und ein Schaltelement D,D' auf. Schutzschaltungen gegen eine kontaktabschnittübergreifende Spannungsverschleppung können bedarfsweise auch bei anderen Ausführungsformen vorgesehen sein, wenn dies gewünscht ist. Es können aber auch andere als die in den Fig. 3a, 3b, 3c, 3d, 4b, 4c und 4d dargestellten Schutzschaltungen gegen eine kontaktabschnittübergreifende Spannungsverschleppung vorgesehen sein.

Bei Belegung der Fassungskontakte über Kreuz müsste hier ein anders verdrahtetes Leuchtmittel, etwa in Form einer LED-Röhre, ausgeführt werden, bei dem beispielsweise B1 statt B2 als Kontakt verbunden ist. Um dies zu vermeiden, können ein oder zwei Wechselschalter I und I' in die LED-Röhre eingebaut werden. Dies ist in Fig. 3.b dargestellt. Eine alternative Verschaltung ist in Fig. 4d dargestellt.

Alternativ kann, wie in Fig. 3.c dargestellt ist, die Anbindung der Elektronik an den einen Kontakt flexibel oder per Schleifkontakt ausgeführt sein und die Seitenkappe K mit den beiden Kontakten B1 (totgelegt) und B2 (angeschlossen) um 180° drehbar (und dann bedarfsweise arretierbar) ausgeführt sein.

In Fig. 3.d ist eine Alternative zum Leuchtmittel gemäß Fig.3.b dargestellt. Beide Schalter I sind I' sind als Kreuzschalter ausgeführt. Zudem ist ein Signalgeber L vorgesehen. Dieser kann vorzugsweise ein optisches Signal geben, wenn er beidseitig ans Stromnetz angeschlossen ist, und ist entweder hochohmig genug, um eine Gefährdung von Personen durch elektrischen Stromschlag zu verhindern, oder er ist seinerseits mit einer Sicherheitsschaltung ausgestattet. Schlägt dann bei eingeschaltetem Stromkreis der Signalgeber L an, so müssen die Schalter I und I' umgelegt werden, um die eigentliche Leuchteneinheit G mit umgebender Elektronik einzuschalten. Reagiert weder L noch G, so ist nur einer der beiden Schalter umzulegen (oder das Leuchtmittel ist defekt).

In der Fig. 4.a ist ein Leuchtmittel dargestellt, bei dem linksseitig die Brücke durch einen arretierbaren Schalter (nicht Taster) unterbrochen ist. In der Betriebsanleitung könnte die Anweisung enthalten sein, den Schalter erst nach erfolgter Montage zu aktivieren und vor Demontage zu deaktivieren. Alternativ könnte auch ein automatischer Taster vorgesehen werden, der dann aber nur einphasig die Brücke unterbrechen müsste. Rechtsseitig müsste das Relaiselement 73 hochohmig genug ausgeführt sein, um "seitenimmanenten Stromschlag" zu verhindern, oder aber das Element muss mit einem entsprechend hochohmigen Widerstand oder aber ebenfalls einem Taster bzw. Schalter (entsprechend der linken Seite) in Reihe geschaltet werden.

Bei dem mit 77 bezeichneten Bauteil handelt es sich um einen aus dem Stand der Technik bekannten, sogenannten Starter einer Fassung für Leuchtstoffröhren. Der Starter kann aber auch gebrückt und bedarfsweise auch entfernt werden.

Sinnvoller könnte die in Fig. 4.b dargestellte Anordnung sein, in der die ursprünglich über den Starter (der hierbei ausgebaut werden muss) laufende Verbindung nun leuchtmittelintern geschieht und der ursprüngliche externe Starter nun durch einen internen Widerstand R (zur Gewährleistung eines hinreichend hohen Widerstandes zur Begrenzung des Stromes, der bei Berühren eines offenen Kontaktes fließen kann) oder im einfachsten Fall eine Drahtbrücke ersetzt wird. Ähnlich wie in Fig. 3.c dargestellt, kann die Anpassung an die Polung des Leuchtmittels über drehbare Seitenkappen erfolgen, hier jedoch in zweifacher Ausführung als K und K' oder aber mit Kreuzschaltern entsprechend der Fig. 4.c. Dies wird beispielsweise durch flexible Zuleitungen oder Schleifkontakte ermöglicht. Ein konstruktiv einfach ausgeführtes Leuchtmittel ist in Fig. 4d dargestellt, bei dem zwischen den Kontakten jedes Kontaktabschnitts ein, vorzugsweise manuell, zu betätigender Wechselschalter I,I' vorgesehen ist.

Auch bei diesem Ausführungsbeispiel ist ein Signalgeber L vorgesehen, alternativ könnte dieser auch wegfallen und die Kontakte B1 und B1' ohne inneren Anschluss bleiben.

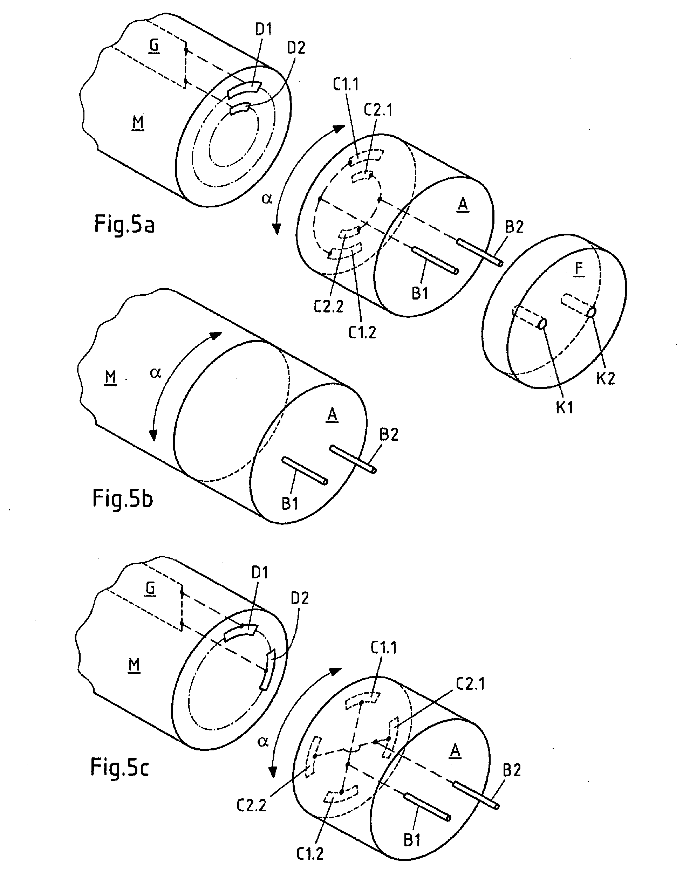

Eine Sonderform des Kreuzschalters lässt sich aufbauen, indem, wie in Fig. 5.a und 5.b dargestellt, die drehbar gelagerten oder drehbar steckbaren Seitenkappen A und das Leuchtenmittelteil M derart mit Schleifkontakten versehen sind, dass durch Drehung um 180° die Polung der Seitenkappen vertauscht wird. Gemäß Fig. 5.a ist der Kontakt K1 der Fassung F über den Kontakt B1 der Seitenkappe A, den Schleifkontakt C1.1 und den Gegenkontakt D1 mit dem ersten Anschluss der Leuchteneinheit G verbunden, während der Kontakt K2 der Fassung F über den Kontakt B2 der Seitenkappe A und den Schleifkontakt C2.1 und den Gegenkontakt D2 mit dem zweiten Anschluss des Leuchtmitteltreibers oder der Leuchteneinheit G verbunden ist. Eine 180°-Drehung der Seitenkappe A gegenüber dem Leuchtenmittelteil M um die gemeinsame Hauptachse führt aufgrund der gezeigten Verdrahtung dazu, dass die genannte Verschaltung bestehen bleibt, während die Kontakte B1 und B2 die Seiten wechseln und so an den jeweils anderen Gegenkontakt in der Leuchtmittelfassung eingesetzt werden (B1 an K2 und B2 an K1), während die Orientierung des Mittelteils M gleich bleibt. Sind die Schleifkontakte so wie gezeigt in verschiedenen Abständen von der Hauptachse angeordnet, können sie auch einzeln oder sämtlich als Ringkontakte ausgeführt werden. Die Kontakte C1.1 und C1.2 bzw. C2.1 und C2.2 bilden dann jeweils einen ringförmigen Kontakt C1 bzw. C2.

Alternativ können die Kontakte auch im gleichen Abstand von der Mittellinie, aber in versetzten Winkeln, vorzugsweise um 90° versetzt, gegeneinander angeordnet sein. Dies ist in Fig.5.c dargestellt. Vorteilhafterweise lässt sich die Seitenkappe A arretieren. Ferner können die Schleifkontakte und der Arretierungsmechanismus so ausgebildet sein, dass eine Korrektur der Einbaulage des Mittelteils M um einige bis zu 90° in beide Drehrichtungen möglich ist.

Schutzschaltungen mit elektrisch/elektronisch oder magnetisch betätigten Schaltern:

Die manuell zu betätigenden Wechsel- und Kreuzschalter I und I' des Leuchtmittels gemäß Fig. 3.b, 3.d 4.c und 4.d können durch eine elektrische/elektronische Lösung ersetzt werden, bei der die stromführenden Anschlüsse automatisch detektiert und entsprechend weitergeschaltet werden. Die Signalgeber L können dabei ersatzlos entfallen.

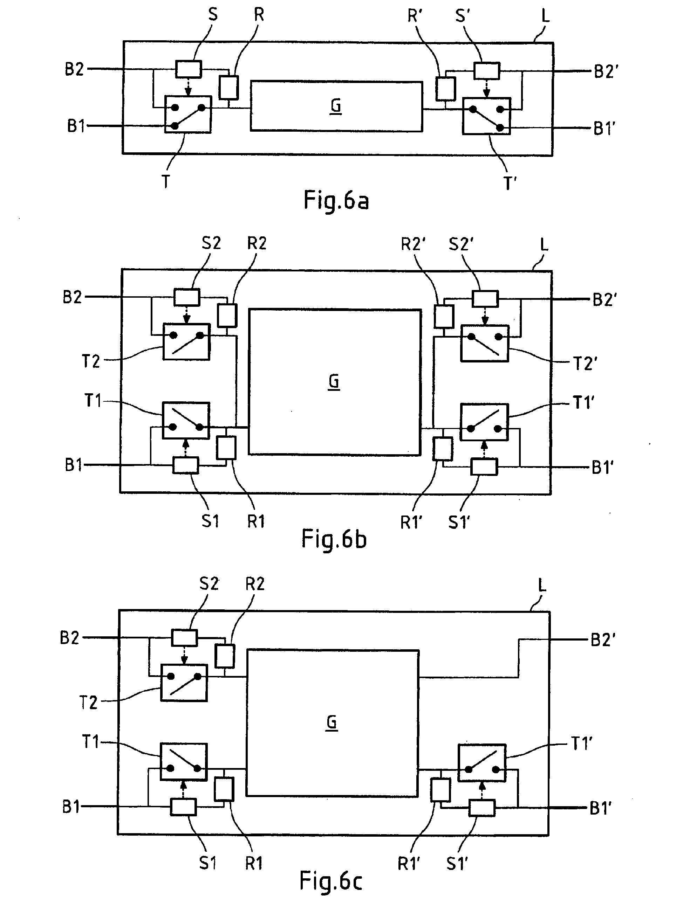

In der Fig. 6a ist ein Leuchtmittel dargestellt, bei dem der Starter in der Leuchte entfernt ist. Gezeigt ist ein Leuchtmittel L mit den Kontakten B1 und B2 auf der einen sowie B1' und B2' auf der gegenüberliegenden Seite. Zentraleinheit des Leuchtmittels ist die eigentliche lichtemittierende Leuchteneinheit G, die zudem eine Ansteuerungselektronik sowie optional eine Sicherheitsschaltung zur Verhinderung von "Spannungsverschleppungen" zwischen beiden Leuchtmittelseiten enthalten kann.

Beide Seiten umfassen einen Taster, vorzugsweise "selbstrückstellenden Schalter", T,T', der im nicht angesteuerten Zustand die elektrische Verbindung zwischen Kontakt B1/B1' und der Leuchteneinheit G herstellt. Wird nun das Leuchtmittel derart in eine Fassung eingesetzt, dass zwischen den Kontakten B1 und B1' die notwendige Betriebsspannung anliegt, so ist der Stromkreis geschlossen und an der Leuchteneinheit G liegt Spannung an. Bei fehlerhafter Montage verhindern die Widerstände R und R' gemeinsam mit den Innenwiderständen der Tasteransteuerungen S und S', dass eine gefährliche Spannungsverschleppung innerhalb einer Seite (von B1 nach B2 bzw. von B1' nach B2') erfolgen kann.

Liegt nun nicht an B1, sondern an B2 Betriebsspannung an, so wird der Stromkreis für die Tasteransteuerung S geschlossen, und diese "aktiviert" den Taster T, der nun die Verbindung der Zentraleinheit G mit dem Kontakt B1 unterbricht und stattdessen die Verbindung mit dem Kontakt B2 herstellt. Der Kontakt B1 ist nun vollständig von allen anderen Kontakten entkoppelt, so dass keine Spannungsverschleppung zwischen B1 und B2 auftreten kann.

Um den Taster T im aktivierten Zustand zu halten, sind die Innenwiderstände des Tasters T und der Tasteransteuerung S, der Widerstand R und der Widerstand der lichtemittierenden Leuchteneinheit G so aneinander angepasst, dass die Tasteransteuerung S bei Anliegen einer Betriebsspannung permanent in Funktion bleibt und den Taster T aktiviert. Weiterhin sind diese Widerstände so dimensioniert, dass eine versehentliche Aktivierung der Taster durch Berühren eines oder mehrerer Kontakte im halbmontierten Zustand des Leuchtmittels vermieden wird.

Das zuvor beschriebene Schaltverhalten wird auch an der anderen Seite durch die Schaltelemente R', S' und T' erreicht, wenn die Spannung an B2 anliegt. Die Zeitkonstanten der Schaltungen sind so ausgeführt, dass auch in dem Fall, wenn die Betriebsspannung zwischen B2 und B2' anliegt, ein sicheres Umschalten gewährleistet wird.

In Fig. 6b ist ein Leuchtmittel mit den Kontakten B1, B2, B1' und B2' dargestellt, die jeweils mit einem separaten, im nichtaktivierten Zustand den Stromfluss unterbrechenden, selbstrückstellenden Ein-Tastern T1, T2, T1' und T2', einer Tasteransteuerung S1, S2, S1' und S2' sowie einem Widerstand R1, R2, R1' und R2' versehen sind. Wird nun das Leuchtmittel derart in eine Fassung eingesetzt, dass zwischen einem der Kontakte B1 oder B2 einerseits und B1' oder B2' andererseits die notwendige Betriebsspannung anliegt, so wird der Stromkreis für die entsprechenden Schalter S1 oder S2 einerseits und S1' oder S2' andererseits geschlossen. Die Schalter S1 oder S2 einerseits und S1' oder S2' andererseits wiederum aktivieren die durch sie angesteuerten Ein-Taster, so dass die Leuchteneinheit G Licht emittieren kann. Die beiden nicht angesteuerten Ein-Taster bleiben deaktiviert.

Wird das Leuchtmittel nur einseitig eingesetzt, so bleiben alle Ein-Taster deaktiviert. Eine Spannungsverschleppung sowohl seitenimmanenter als auch seitenübergreifender Art ist damit unmöglich gemacht. Zur Reduktion der Leistungsverluste können die Taster mit einer Selbsthaltungssteuerung versehen sein. In diesem Fall kann zusätzlich eine Verschaltung vorgesehen werden, die für die Zeit der Aktivierung der Taster den Stromkreis für die entsprechende Tasteransteuerung unterbricht. Auch können zwei oder drei der Bauelemente R1, S1 und T1 bzw. R2, S2 und T2 zu einer Funktionseinheit zusammengefasst sein. Um den Taster T im aktivierten Zustand zu halten, sind die Innenwiderstände der Taster und der Tasteransteuerungen, die Widerstände R1, R2, R1' und R2' sowie der Widerstand der lichtemittierenden Leuchteneinheit G so aneinander angepasst, dass bei anliegender Betriebsspannung die Taster sicher aktiviert werden. Weiterhin sind diese Widerstände so dimensioniert, dass eine versehentliche Aktivierung der Taster durch Berühren eines oder mehrerer Kontakte im halbmontierten Zustand des Leuchtmittels vermieden wird.

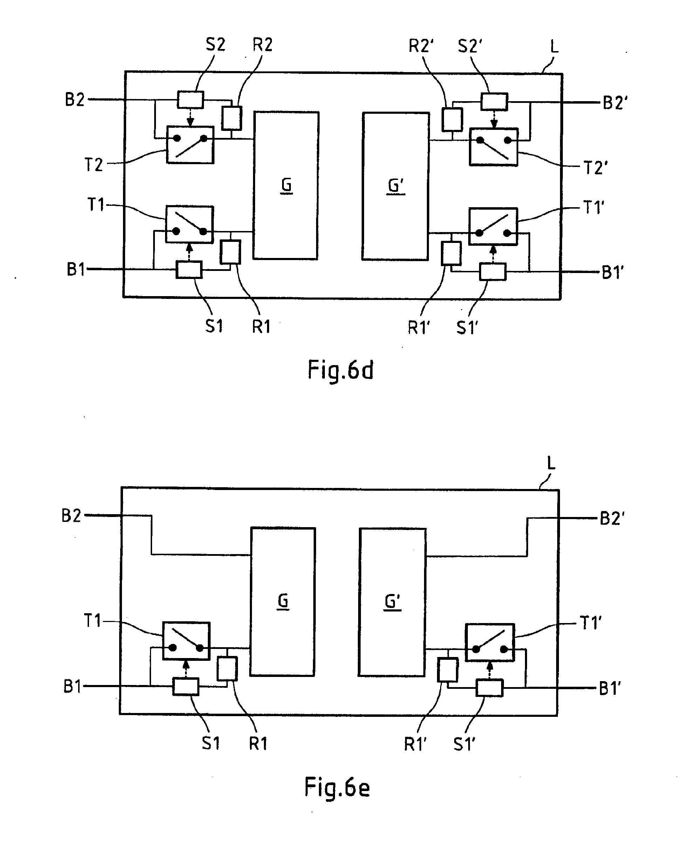

Bei Verwendung eines mechanisch, elektrisch/elektronisch oder magnetisch betätigten Schalters je Leuchtmittelseite muss der Stromkreis auf einer der beiden Leuchtmittelseiten nur einmal unterbrochen werden, um eine vollumfängliche Schutzwirkung für Leuchtmittel zu erzielen, die beidseitig jeweils zweipolig angeschlossen werden. Dies ist beispielhaft in der Fig. 6d dargestellt.

Bei Leuchtmitteln mit zwei unabhängig voneinander betriebenen Leuchteneinheiten G, G', kann jeder Kontaktabschnitt separat mit wenigstens einer Schutzschaltung gegen seitenimmanente Spannungsverschleppung gesichert werden. Ein solches Leuchtmittel ist in Abb. 5.2-4 dargestellt.

Wenn ausschließlich der seitenimmanente Schutz gewährleistet werden soll, etwa weil ein Schutz gegenüber seitenübergreifender Spannungsverschleppung entweder nicht gewünscht oder dieser Schutz anderweitig bereits sichergestellt ist, kann je Leuchtmittelseite auf einen Schalter verzichtet werden. Es kann demnach ein Leuchtmittel mit zwei Leuchteinheiten G, G' vorgesehen sein, bei dem jeder der beiden Kontaktabschnitte durch eine elektrische Schaltung gegen seitenimmanente Spannungsverschleppung geschützt ist. Das gleiche Prinzip ist auch auf Leuchtmittel anzuwenden, die mehr als zwei Kontaktabschnitte, bedarfsweise mit wenigstens zwei Kontakten, aufweisen. Ein entsprechendes Leuchtmittel ist in der Fig. 6e dargestellt. Bei diesem Leuchtmittel reicht es aus, je Leuchtmittelseite den Stromkreis nur einmal zu unterbrechen.

Die beabsichtigte Schutzwirkung ist auch dann gegeben, wenn die beiden lichterzeugenden Leuchteinheiten G, G' einen unterschiedlichen Spannungsabfall aufweisen, so dass sich der gesamte Spannungsabfall des Leuchtmittels in unterschiedlicher Weise auf beide lichterzeugenden Einheiten G, G' verteilt.

Alternativ könnten die Leuchtmittel der Fig. 6d und 6e mit einer einzigen Leuchteinheit und der damit verbundenen Sicherheitsschaltung ausgestattet sein. Die beiden dann nicht stromführenden Kontakte des nicht stromführenden Kontaktabschnitts könnten dann als sogenannte Dummy-Kontakte ausgebildet sein, um eine Montage des Leuchtmittels in einer Standardfassung zu gewährleisten. Es könnte aber auch lediglich ein, und zwar der spannungsführende, Kontaktabschnitt vorgesehen sein.

Leuchtmittel mit zwei gegenüberliegenden Kontaktabschnitten können also bevorzugt sein, etwa wenn mit Leuchtmitteln, die keine Leuchtstoffrören sein müssen, konventionelle Fassungen für Leuchtstoffröhren genutzt werden sollen. Es kommen aber auch Leuchtmittel mit weniger oder mehr Kontaktabschnitten in Frage.

Bei Leuchtmitteln mit zwei Leuchteinheiten G,G' ähnlich der Leuchtmittel der Fig. 6d und 6e, ist es ebenfalls möglich, jeweils einen Kontakt jedes Kontaktabschnitts über die Fassung miteinander zu verbinden, was dazu führt, dass die beiden Leuchteinheiten G,G' in Reihe geschaltet sind. Bei Verwendung einer handelsüblichen Leuchtstofflampenfassung geschieht dies beispielsweise, indem der Starter durch eine Brücke ersetzt wird. Wenn dann jeder Leuchteinheit, d.h. jedem Kontaktabschnitt, wenigstens eine Schutzschaltung gegen seitenimmanente Spannungsverschleppung zugeordnet ist, wird diese Spannungsverschleppung an jedem Kontaktabschnitt separat ebenso verhindert wie eine seitenübergreifende Spannungsverschleppung. Eine entsprechende Schutzschaltung kann aber auch lediglich einem Kotaktabschnitt bzw. einer Leuchteinheit G,G' zugeordnet sein. Dann wird wenigstens an diesem Kontaktabschnitt eine seitenimmanente Spannungsverschleppung verhindert. Gleichzeitig wird aber infolge der seriellen Anordnung der beiden Leuchteinheiten G,G' weiter eine seitenübergreifende bzw. kontaktabschnittübergreifende Spannungsverschleppung verhindert.

Dies ermöglicht es auch, anstelle der nicht mit einer separaten Schutzeinrichtung gegen seitenimmanente Spannungsverschleppung versehenen Leuchteinheit G,G' eine Brücke vorzusehen, welche die beiden Kontakte des entsprechenden Kontaktabschnitts brückt. Eine seitenübergreifende bzw. kontaktabschnittübergreifende Spannungsverschleppung ist dann weiter verhindert. Die Anordnung der Leuchteinheiten bzw. Kontaktabschnitte in Reihe über eine Verbindung jeweils eines Kontakts eines Kontaktabschnitts über die Fassung der Leuchte hat den Vorteil, dass entsprechende Standardfassungen mit den beschriebenen Leuchtmitteln verwendet werden können.

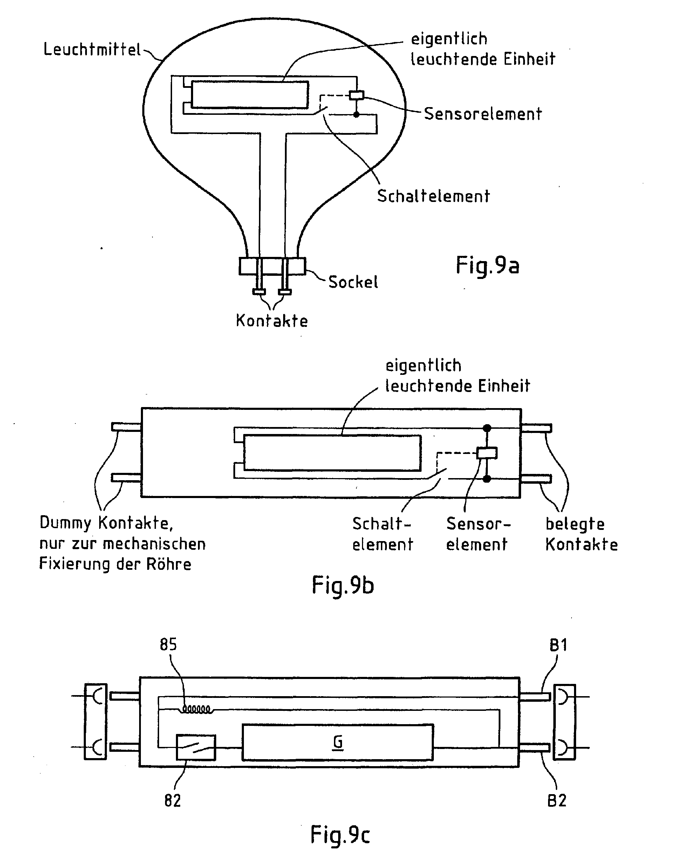

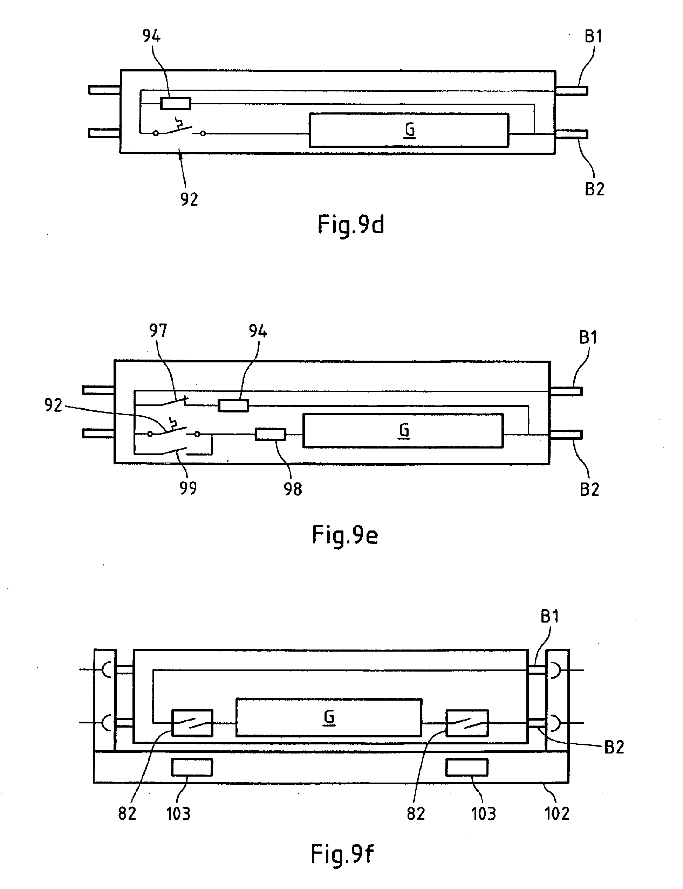

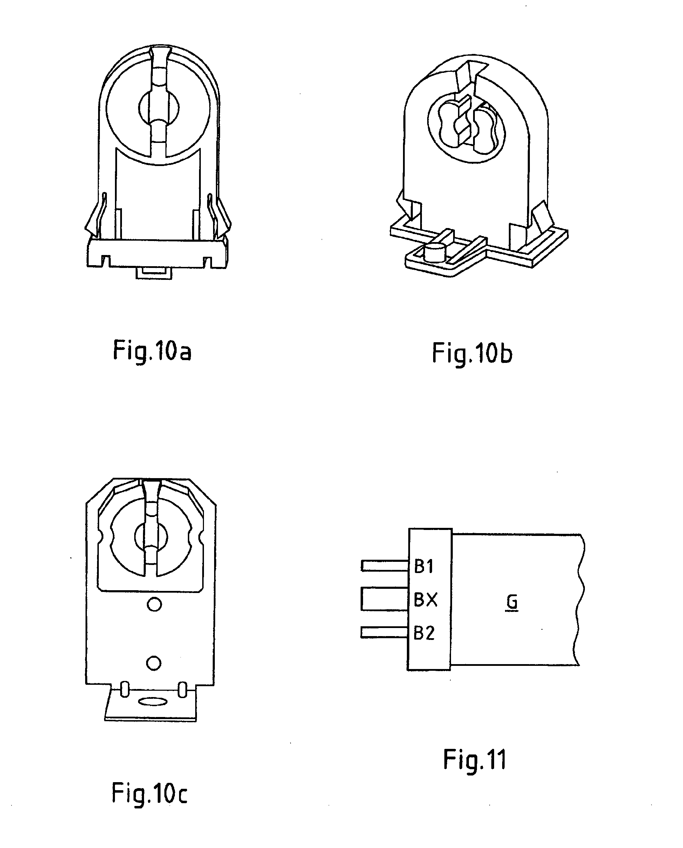

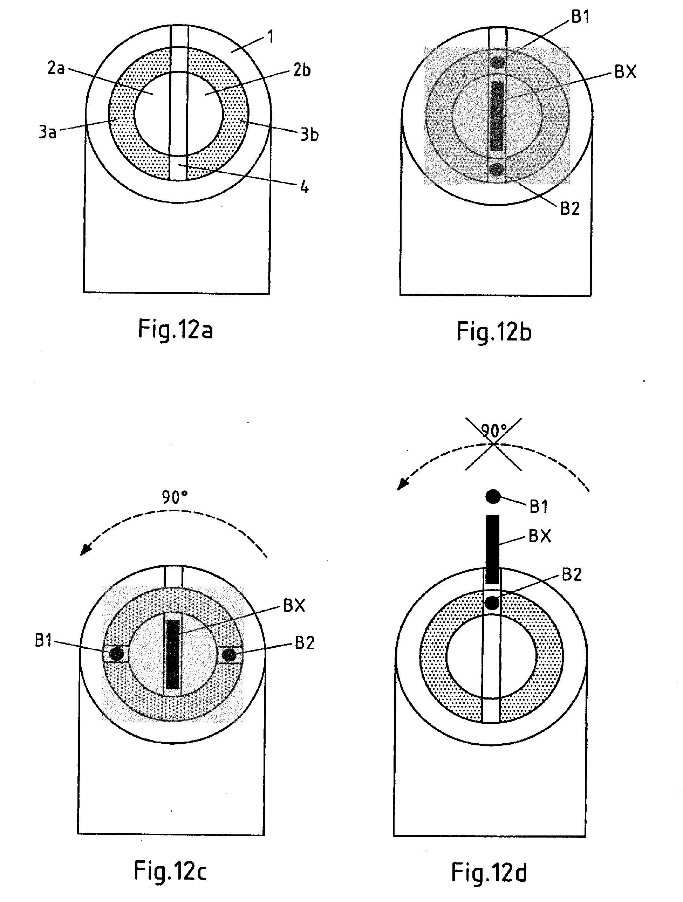

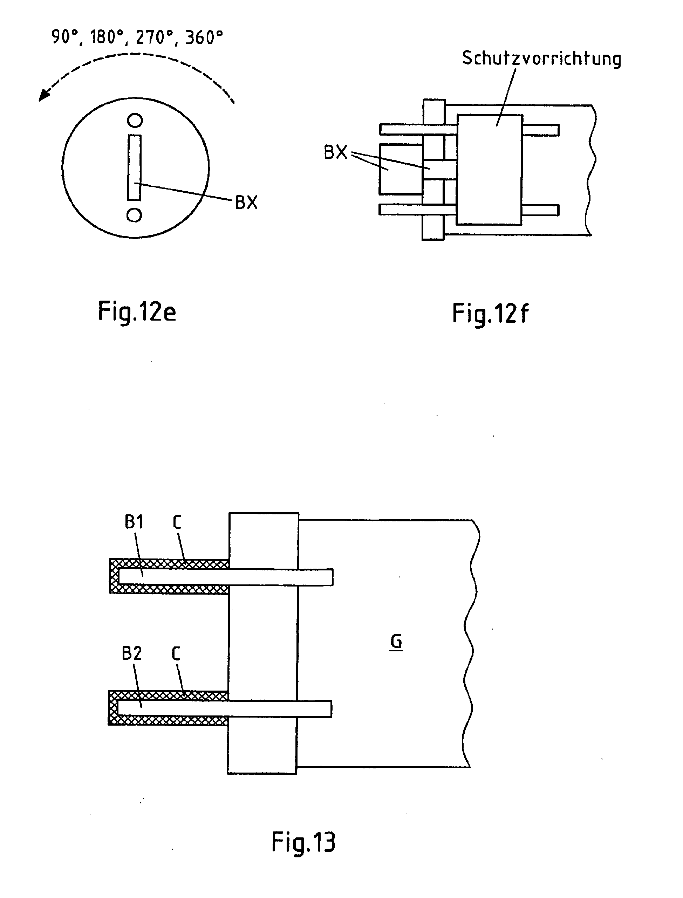

Die einseitig vorgesehene Brücke kann auch durch ein Schaltelement, insbesondere einen Taster, betätigt werden, das im ausgebauten Zustand geöffnet ist, und beim oder nach dem Einsetzen in die Fassung entweder manuell oder automatisiert betätigt die Brücke zwischen beiden Kontakten dieses Kontaktabschnittes schließt und vorzugsweise beim oder nach dem Entnehmen des Leuchtmittels aus der Leuchte diesen Kontakt wieder unterbricht. Damit wird dann auch an diesem Kontaktabschnitt eine seitenimmanente Spannungsverschleppung unterbunden. Die automatisierte Betätigung kann nach einem der in diesem Dokument beschriebenen Wirkprinzipien aufgebaut sein, beispielsweise mechanisch wie in Fig. 11 und 12, magnetisch entsprechend Fig. 9c (ggf. mit der Spule in Reihe geschaltetem zusätzlichem Widerstand) und Fig. 9f, thermisch entsprechend Fig. 9d und 9e oder über eine Sensorelement-, Schaltelement-Widerstandslösung entsprechend Abb. 2.4.2 (das Tasterelement T sollte dabei über eine Selbsthaltungsfunktion verfügen).

Alternativ oder zusätzlich kann vorgesehen sein, dass die beiden Leuchteinheiten G,G' innerhalb des Leuchtmittels untereinander gebrückt und somit in Reihe zueinander geschaltet sind. Die Brücke ist also Bestandteil des Leuchtmittel und nicht der Fassung. Dann ist vorzugsweise an den beidem Kontaktabschnitten jeweils nur ein Kontakt vorgesehen oder jeweils ein Kontakt nicht, jedenfalls nicht unmittelbar, mit der entsprechenden Leuchteinheit G,G' verbunden. So kann eine seitenimmanente Spannungsverschleppung verhindert werden. Ist dennoch eine zur seitenimmanenten Spannungsverschleppung beschriebene Schutzschaltung vorgesehen, verhindert diese eine seitenübergreifende bzw. kontaktabschnittsübergreifende Spannungsverschleppung, und zwar unabhängig davon, ob tatsächlich zwei Leuchteinheiten G,G' vorgesehen oder beispielsweise anstelle der zweiten Leuchteinheit die entsprechenden Kontakte des entsprechenden Kontaktabschnitts gebrückt sind.

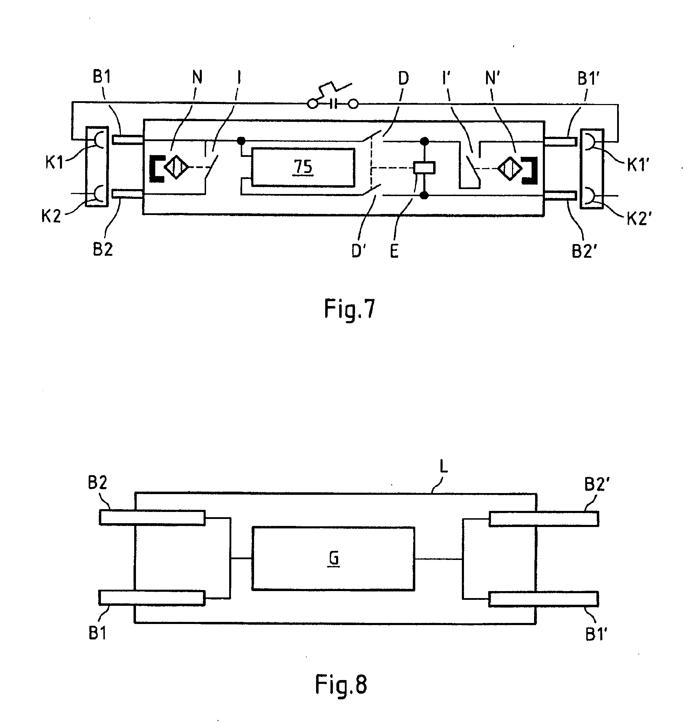

In einer weiteren Ausführung könnte eine elektronische Schaltung erzielt werden, indem bei dem in Abbildung 4.a dargestellten Leuchtmittel linksseitig die Brücke durch einen Kontakt I eines induktiven Näherungsschalters N ersetzt wird und rechtsseitig die Verbindung vom Kontakt B1' zum Relais E wiederum durch einen weiteren Kontakt I' eines induktiven Näherungsschalters N' erfolgt (vgl. Fig. 7). Diese bringen die jeweils zugeordneten Kontakte I und I' erst nach dem Einsetzen des Leuchtmittels in die Fassung mit deren Metallkontakten K1-K2 und K1'-K2' in Kontakt. Die induktiven Näherungsschalter sollten so positioniert und eingestellt sein, dass die Kontakte B1/B2 und B1'/B2' keinen Einfluss auf das Schaltverhalten haben.

Alle manuell oder elektrisch/elektronisch betätigten Schalter können alternativ auch als magnetisch betätigte Schalter (z.B. Reed-Relais) ausgebildet sein. Dann wird wenigstens ein Magnet entweder vor der Montage des Leuchtmittels an der Leuchte bzw. der Fassung oder nach der Montage des Leuchtmittels am Leuchtmittel oder der Fassung angebracht, vorzugsweise angeklebt oder angeklipst. Auf diese Weise kann unter Umständen zwischen verschiedenen Kontakten eines Kontaktabschnitts umgeschaltet werden. Es kann alternativ oder zusätzlich aber auch eine Unterbrechung des Stromkreises erreicht werden. Werden beispielsweise bei in den Fig. 2a, 2b und 2d dargestellten Leuchtmitteln die Schalter A,A' als magnetisch betätigte Schalter ausgeführt, kann auf die zusätzlichen Schalter E,E' verzichtet werden.

Die zuvor beschriebenen Sensor- und Schaltelemente können bedarfsweise in einem Relais vereinigt sein. Auch kann als Sensorelement eine magnetische Spule und als Schaltelement ein magnetischer Schalter ausgebildet sein. Alternativ kann das Sensorelement ein leuchtendes Element, insbesondere eine Leuchtdiode, und das Schaltelement ein optisch aktivierbarer Schalter sein.

Ein Schutz vor seitenimmanenter wie auch vor seitenübergreifender Spannungsverschleppung kann in einem weiteren Ausführungsbeispiel ebenfalls erzielt werden, indem alle Kontaktstifte und/oder jeweils ein den Kontaktstiften direkt nachgelagertes Leitungselement so ausgeführt werden, dass diese Kontaktstifte bzw. Leitungselemente nur bei Anliegen einer Spannung am Kontaktstift elektrisch leitend werden. Dies kann beispielsweise durch die Verwendung intrinsischer Halbleiter (mit oder ohne zusätzliche Dotierung) geschehen.

Beispielweise könnten die Taster T1, T2, T1' und T2' des Leuchtmittels gemäß Fig. 6b durch intrinsische Halbleiter als den Elektronenfluss im Leitungsband ermöglichende oder verhindernde Elemente ersetzt werden und die Tasteransteuerungen S1, S2, S1' und S2'derart gestaltet werden, dass diese die intrinsischen Halbleiter bei Anliegen der Betriebsspannung in den leitenden Zustand versetzen. Alternativ können zwei bis vier der Bauteile B1, R1, S1 und T1 bzw. B2, R2, S2 und T2 zu einer Funktionseinheit zusammengefasst durch einen intrinsischen Halbleiter ausgeführt sein, wobei das den Elektronenfluss im Leitungsband ermöglichende oder verhindernde Element, etwa der Taster T1, auf jeden Fall dazu gehören sollte.

Bei der Verwendung intrinsischer Halbleiter kann der zusätzliche Widerstand R1, R2, R1' und R2' einen Wert von 0 Ohm annehmen. Es ergibt sich ein Aufbau, bei dem die Kontakte B1, B2, B1' und B2' als intrinsische Halbleiter ausgeführt sind und die Funktionen der Prüfung des Anliegens einer Betriebsspannung, des Ermöglichen oder Verhindern des Elektronenflusses im Leitungsband und/oder die Ansteuerung der letztgenannten Funktion in einem Bauteil vereinen. Ein entsprechendes Leuchtmittel ist in Fig. 8 dargestellt.

In den Fig. 9a und 9b sind Leuchtmittel für Fassungen mit nur einem Fassungssockel oder für Fassungen mit zwei Fassungssockeln dargestellt, wobei jedoch nur ein Sockel stromführend ist.

Weist ein Fassungssockel eines solchen oder eines anderen Leuchtmittels mehr als zwei Kontakte auf, so ist ein Schutz gegen Stromschlag durch Spannungsverschleppung zwischen den Kontakten zur Aufnahme durch diesen Sockel durch die hier und nachfolgend beschriebenen Maßnahmen ebenfalls erzielbar. Beispielsweise können bei n Kontakten mindestens n-1 Kontakte mit einer Schutzeinheit aus Sensor- und Schaltelement versehen sein. Alternativ können ein oder mehrere Sensorelemente auf verschiedene Schaltelemente einwirken. Bei drei Kontakten an einem Kontaktabschnitt könnte beispielsweise ein Sensorelement auf zwei Schaltelemente einwirken.

In der Fig. 9c ist ein Leuchtmittel mit einer Schutzvorrichtung in Form eines magnetisch zu betätigenden Schalters 82 vorgesehen. Die Schaltung umfasst einen primären Stromkreis mit einer Spule 85, die selbst hochohmig oder um einen hochohmigen Widerstand in Reihenschaltung mit der Spule 85 ergänzt ist, so dass zwischen den Kontakten B1 und B2 nur ein hinreichend geringer Strom fliest, um eine den Benutzer gefährdende, seitenimmanente Spannungsverschleppung zu vermeiden. Die Spule 85 erzeugt im stromdurchflossenen Zustand ein Magnetfeld, das den Schalter 82 schließt. Der die Leuchteinheit G umfassende Stromkreis wird somit geschlossen.

In der Fig. 9d ist ein Leuchtmittel mit einer Schutzvorrichtung umfassend einen thermisch zu betätigenden Schalter dargestellt. Zunächst erwärmt die über den Heizwiderstand 94 abfallende Spannung denselben, der infolge seiner Temperatur den in entsprechender Nähe platzierten Schalter 92 schließt. Der die Leuchteinheit G umfassende Stromkreis wird somit geschlossen. Zusätzlich zu dem Heizwiderstand 94 kann wie zuvor beschrieben und aus dem gleichen Grund ein hochohmiger Widerstand vorgesehen sein.

In der Fig. 9e ist ein Leuchtmittel mit einem zusätzlichen Schalter 97 und einem Relais 98 vorgesehen. Wenn der Heizwiderstand 94 eine bestimmte Temperatur erreicht hat, wird der Schalter 92 geschlossen, woraufhin das Relais 98 den Schalter 97 öffnet und den weiteren Schalter 99 schließt. Der die Leuchteinheit G umfassende Stromkreis wird somit geschlossen.

In der Fig. 9f ist ein Leuchtmittel mit einer magnetischen Schutzvorrichtung dargestellt. Das Leuchtmittel befindet sich in einer Fassung 102. Im korrekt eingesetzten Zustand gelangen die Schalter 82 des Leuchtmittels in die Nähe von Dauermagneten 103 der Fassung 102, so dass die Schalter 82 geschlossen werden und die Leuchteinheit G mit Spannung versorgt wird. Bedarfsweise ist nur ein magnetisch zu betätigender Schalter 82 oder mehrere solche Schalter 82 vorgesehen.

Der wenigstens eine Dauermagnet kann entweder vor der Montage des Leuchtmittels an der Leuchte oder nach der Montage des Leuchtmittels an dem Leuchtmittel oder der Leuchte angebracht, vorzugsweise angeklebt oder angeklipst, sein. Der wenigstens eine Dauermagnet kann dabei so angebracht werden, dass der Dauermagnet beim Demontieren des Leuchtmittels aus der Fassung zwangsweise vom Leuchtmittel getrennt wird und/oder dass der wenigstens eine Dauermagnet vor dem Demontieren des Leuchtmittels aus der Fassung entfernt, vorzugsweise vom Leuchtmittel zwangsweise getrennt, werden muss.

Schutz durch mechanische Vorrichtungen und auf der Leuchtmittelhauptachse angeordneten, mechanisch betätigten Schalter:
Marktübliche Leuchtstoffröhren fasst man bei der Montage mit beiden Händen nahe den Fassungen und schiebt ihre Stifte in die Fassungen. Anschließend dreht man die Röhre um etwa 90°. Durch die Drehung werden die Kontaktstifte der Lampe und die Kontakte der Fassung verbunden und somit der elektrische Stromkreis geschlossen.

In der Fig. 10a-c sind marktübliche Leuchtstofflampenfassungen dargestellt, bei denen in der Mitte der Fassung ein nicht beweglicher Bereich angeordnet ist, um den herum die Kontaktstifte des Leuchtmittels in die Fassung gedreht werden können. Der nicht bewegliche Bereich kann genutzt werden, um einen Schalter anzusteuern.

Zu diesem Zweck ist bei dem in Fig. 11 dargestellten, erfindungsgemäßen Leuchtmittel zwischen den beiden Kontaktstiften B1 und B2 mittig eine nichtleitende Zentriervorrichtung (BX) angeordnet, die das Leuchtmittel in der Fassung zentriert und ein unsachgemäßes Einsetzen des Leuchtmittels verhindert. Die mittlere, nichtleitende, also beispielsweise nicht leitend mit der Schaltung des Leuchtmittels verbundene, Zentriervorrichtung (BX) ist um die Hauptachse (Längsachse) des Leuchtmittels drehbar in Form eines rechteckigen Kontaktstiftes ausgeführt. Der drehbare, rechteckige Kontaktstift kann z.B. zum Betätigen eines, vorzugsweise selbstrückstellenden, Schalters oder einer anderen geeigneten Schutzvorrichtung genutzt werden. Besonders vorteilhaft ist dabei der gleichzeitige Schutz sowohl vor seitenimmanentem Stromschlag als auch vor Stromschlag durch Spannungsverschleppung zwischen den Leuchtmittelenden. Es kann aber auch nur eine von beiden Spannungsverschleppungen verhindert werden.

In der Fig. 12a ist schematisch ein Fassungssockel mit starren Führungselementen 1, 2a und 2b, Kontaktzonen 3a und 3b sowie einem Einführungskanal 4 dargestellt. In der AFig. 12b sind zudem die Kontakte B1 und B2 sowie die Zentriervorrichtung BX des Leuchtmittels nach dem Einsetzen in den Einführungskanal 4 dargestellt. Bei der in der Fig. 12c dargestellten Anordnung sind die Kontaktstifte B1 und B2 mit dem Leuchtmittel in die Kontaktzonen 3a und 3b eingedreht. Die Zentriervorrichtung BX wird dabei von den Führungselementen 2a und 2b gehalten und so gegenüber dem restlichen Leuchtmittel verdreht (vorliegend um 90°). Damit wird ein nicht dargestellter zweipoliger Schalter A geschlossen, wodurch die Leuchteneinheit mit Spannung versorgt wird.

Wie in Fig. 12d dargestellt ist, wird die Zentriervorrichtung BX des Leuchtmittels vom Führungselement 1 des Fassungselementes mechanisch blockiert, wenn nur einer der beiden Kontakte B1 und B2 im Fassungselement eingesetzt ist. Der Kontakt B2 kann nicht in die Kontaktzone 3a oder 3b eingeschoben werden. Sollte die Anordnung genug Spiel besitzen, um den Kontakt B1 doch mit einer der Kontaktzonen 3a oder 3b zu verbinden, so verhindert der in dieser Lage der Zentriervorrichtung BX noch nicht eingeschaltete Drehschalter die Spannungsverschleppung an einen der anderen Kontaktstifte des Leuchtmittels.

Das andere Ende des Leuchtmittels kann spiegelsymmetrisch aufgebaut sein. Der von der Zentriervorrichtung BX angesteuerte Schalter kann in einer, vorzugsweise jedoch in beide Drehrichtungen bei Auslenkung von etwa 90°, vorzugsweise zwischen 80° und 100°, aktiviert sein.

Die Schutzschaltung ist schematisch in Fig. 12e und 12f dargestellt.

Schutz durch reversible Isolation:
Die Sicherheit vor Stromschlag kann auch durch eine Isolation, die nach Ausbau des Leuchtmittels in kurzer Zeit ihre Isolationseigenschaften vollständig wiedererlangt, erfolgen. Beispielsweise geschieht dies durch isolierende, elastische Materialien, die ein "Erinnerungsvermögen" für ihre ursprüngliche Form besitzen und nach Zwangsverformung durch eine äußere Kraft wieder in ihre Ausgangsform zurückkehren, sobald diese äußere Kraft wegfällt. Man spricht dabei auch von Werkstoffen mit Formgedächtnis. Bedarfsweise können diese Werkstoffe sowohl eine Öffnung bilden als auch wieder "Zusammenwachsen", d.h. die Öffnung schließen.

Die Öffnung des Werkstoffs kann durch eine Zwangsverformung desselben erfolgen. Durch das Formgedächtnis können voneinander getrennte Oberflächen (z.B. Schnittkanten) bei Wegfall der Zwangsverformung wieder zusammengeführt werden. Werkstoffe mit entsprechenden Selbstheilungseigenschaften werden beispielsweise in der DE 19 921 142 A1 beschrieben, und zwar als Schutzüberzug eines Scheibenkörpers. Elektrische Isolationen aus entsprechenden Werkstoffen werden nachfolgend als »reversibel isolierend« bezeichnet.

In der Fig. 13 ist eine reversibel isolierende Beschichtung C der Kontaktstifte B1 und B2 dargestellt, die den Monteur beim Einbau schützt. Die Beschichtung kann zum Beispiel aus selbstausheilenden Kunststoffen bestehen. Beim Einsetzen in die Fassung wird die Isolation durch die eigentlichen Federkontakte der Fassung gezielt beschädigt und gibt den Kontakt damit frei für einen elektrischen Kontakt für das Schließen des Stromkreises. Beim Ausbau gibt der Federkontakt der Fassung den beschädigten Bereich frei und die Isolation nimmt eigenständig ihre ursprüngliche Form wieder an, weshalb der Monteur auch beim Ausbau vor Stromschlag geschützt ist.

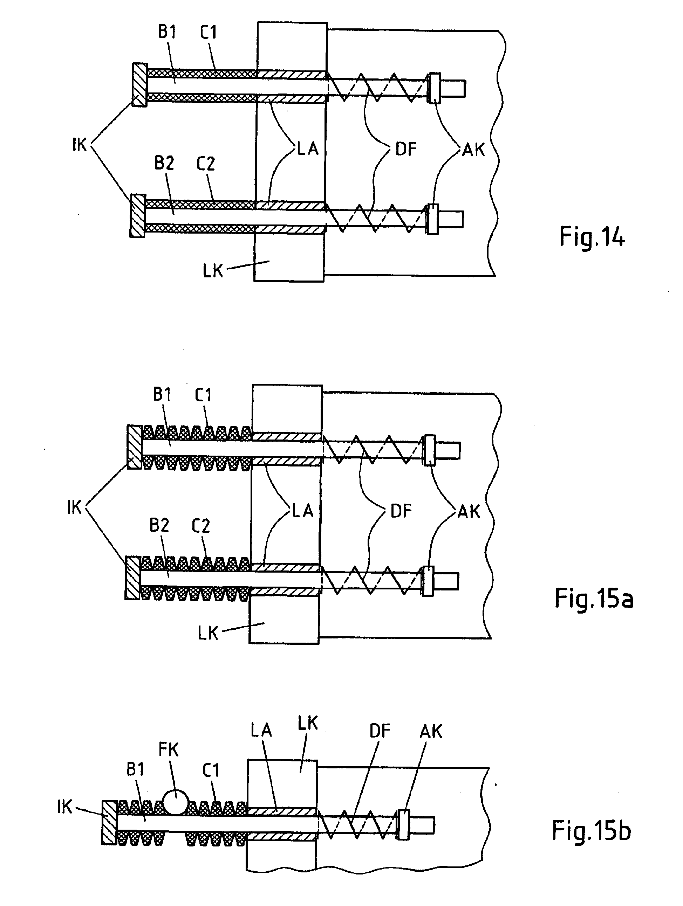

In der Fig. 14 ist ein Kontaktabschnitt dargestellt, bei dem auf den Kontaktstiften B1, B2 je eine reversibel isolierende Hülse C1, C2 vorgesehen ist, die durch je eine isolierende Kappe IK auf den Kontaktstiften fixiert sind. Die Hülse kann zum Beispiel aus selbstausheilenden Kunststoffen bestehen. Die Kappe ist mit dem jeweiligen Kontaktstift fest verbunden. Die Kontaktstifte B1, B2 sind durch Lager LA beweglich in der Leuchtmittelendkappe LK geführt und besitzen je eine Aufkantung AK. Je eine Druckfeder DF drücken nun die Kontaktstifte soweit ins Leuchtmittelinnere, wie dies die isolierenden Hülsen C1, C2 zulassen. Wird das Leuchtmittel in eine korrespondierende Fassung eingesetzt, so beschädigen die Kontakte der Fassung die isolierenden Hülsen und ermöglichen so die Berührung mit den Kontaktstiften B1, B2. Wird das Leuchtmittel aus der Fassung entfernt, so bewirken die Federn AK, dass die reversibel isolierenden Hülsen C1, C2 zusammengedrückt werden und so in kürzester Zeit ein effektiver Berührungsschutz wieder hergestellt wird. Sind die isolierenden Hülsen aus selbstheilenden Materialien hergestellt, so wird dadurch auch die notwendige äußere Kraft zur Erzielung einer guten Selbstheilung aufgebracht.

In der Fig. 15a ist ein Kontaktabschnitt mit sich selbst reaktivierender Isolation dargestellt, wobei über die Länge verteilt als Sollbruchstellen fungierende Materialverschwächungen vorgesehen sind. Einerseits erleichtern diese Verschwächungen die Herstellung der Verbindung zwischen den Kontakten beim Einsetzen des Leuchtmittels in die Fassung. Andererseits verbessern sie durch die Konzentration der Isolationsbeschädigung auf einen definierten Bereich auch die Rückbildung der Isolation nach Entnahme des Leuchtmittels aus der Fassung.

In der Fig. 15b ist die aktivierte (oben) und durch den Federkontakt FK der Fassung an einer Sollbruchstelle deaktivierte (unten) Isolation dargestellt.

## Patentansprüche

1. Leuchtmittel, insbesondere zum Betrieb in Fassungen für Leuchtstofflampen,
**dadurch gekennzeichnet, dass** ein Kontaktabschnitt zum Einsetzen in einen Fassungssockel, umfassend zwei Kontaktstifte (B1,B2) und eine mittig zwischen den Kontaktstiften (B1,B2) angeordnete Zentriervorrichtung (BX) zum Zentrieren des Leuchtmittels in der Fassung, vorgesehen ist und
- dass die Zentriervorrichtung (BX) zum Betätigen eines Schalters oder einer Schutzvorrichtung um eine Hauptachse des Leuchtmittels drehbar ist.

2. Leuchtmittel nach Anspruch 1,
**dadurch gekennzeichnet, dass**
- die Zentriervorrichtung (BX) mit dem Schalter oder der Schutzvorrichtung verbunden ist und
- dass der Schalter oder die Schutzvorrichtung eine seitenimmanente Spannungsverschleppung und/oder eine Spannungsverschleppung zwischen zwei Kontaktabschnitten verhindert.

3. Leuchtmittel nach Anspruch 1 oder 2,
**dadurch gekennzeichnet, dass** die Schutzvorrichtung einen, vorzugsweise mechanisch betätigten, Schalter aufweist.

4. Leuchtmittel nach einem der Ansprüche 1 bis 3,
**dadurch gekennzeichnet, dass** der Schalter durch Drehung der Zentriervorrichtung (BX) um die Längsachse des Leuchtmittels betätigt wird.

5. Leuchtmittel nach einem der Ansprüche 1 bis 4,
**dadurch gekennzeichnet, dass** der Schalter durch Drehung der Zentriervorrichtung (BX) um etwa 90° betätigt wird.

6. Leuchtmittel nach einem der Ansprüche 1 bis 5,
**dadurch gekennzeichnet, dass** der Schalter als zweipoliger Schalter ausgebildet ist.

7. Leuchtmittel nach einem der Ansprüche 1 bis 6,
**dadurch gekennzeichnet, dass** der Schalter selbstrückstellend ausgebildet ist.

8. Leuchtmittel nach einem der Ansprüche 1 bis 7,
**dadurch gekennzeichnet, dass** der Schalter durch Drehung der Zentriervorrichtung (BX) zur Spannungsversorgung einer Leuchteinheit (G) des Leuchtmittels geschlossen wird.

9. Leuchtmittel nach einem der Ansprüche 1 bis 8,
**dadurch gekennzeichnet, dass** als Leuchteinheit Leuchtdioden (LED) vorgesehen sind.

## Claims

1. Lamp, in particular for operation in sockets for fluorescent lamps, **characterised in that** a contact section is provided for insertion into a socket base comprising two contact pins (B1, B2) and one centring device (BX) arranged in the centre between the two contact pins (B1, B2) for centring the lamp in the socket, and **in that** the centring device (BX) can be rotated about a main axis of the lamp to actuate a switch or a protective device.

2. Lamp according to Claim 1, **characterised in that**
- the centring device (BX) is connected to the switch or the protective device and
- the switch or the protective device prevents a side-intrinsic parasitic voltage and/or a parasitic voltage between two contact sections.

3. Lamp according to either Claim 1 or 2, **characterised in that** the protective device has a switch, which is preferably actuated mechanically.

4. Lamp according to any one of Claims 1 to 3, **characterised in that** the switch is actuated by means of a rotation of the centring device (BX) about the longitudinal axis of the lamp.

5. Lamp according to any one of Claims 1 to 4, **characterised in that** the switch is actuated by means of a rotation of the centring device (BX) by approximately 90°.

6. Lamp according to any one of Claims 1 to 5, **characterised in that** the switch is designed as a bipolar switch.

7. Lamp according to any one of Claims 1 to 6, **characterised in that** the switch is designed to be able to be reset.

8. Lamp according to any one of Claims 1 to 7, **characterised in that** the switch is closed by means of a rotation of the centring device (BX) in order to supply voltage to a light unit (G) of the lamp.

9. Lamp according to any one of Claims 1 to 8, **characterised in that** light-emitting diodes (LEDs) are provided as light units.

## Revendications

1. Luminaire, en particulier pour l'utilisation dans des douilles pour lampes fluorescentes,
**caractérisé en ce que**
une partie de contact est prévue pour l'insertion dans un socle de douille, comprenant deux fiches de contact (B1, B2) et un dispositif de centrage (BX) disposé au milieu entre les fiches de contact (B1, B2) pour le centrage du luminaire dans la douille et
- **en ce que** le dispositif de centrage (BX) peut tourner autour d'un axe principal du luminaire pour l'actionnement d'un interrupteur ou d'un dispositif de protection.

2. Luminaire selon la revendication 1,
**caractérisé en ce que**
- le dispositif de centrage(BX) est en liaison avec l'interrupteur ou le dispositif de protection et
- **en ce que** l'interrupteur ou le dispositif de protection empêche une tension résiduelle inhérente au côté et/ou une tension résiduelle entre deux parties de contact.

3. Luminaire selon la revendication 1 ou 2,
**caractérisé en ce que**
le dispositif de protection présente un interrupteur, de préférence actionné mécaniquement.

4. Luminaire selon l'une des revendications 1 à 3,
**caractérisé en ce que**
l'interrupteur est actionné par rotation du dispositif de centrage (BX) autour de l'axe longitudinal du luminaire.

5. Luminaire selon l'une des revendications 1 à 4,
**caractérisé en ce que**
l'interrupteur est actionné par rotation du dispositif de centrage (BX) de l'ordre de 90° environ.

6. Luminaire selon l'une des revendications 1 à 5,
**caractérisé en ce que**
l'interrupteur est réalisé en tant qu'interrupteur bipolaire.

7. Luminaire selon l'une des revendications 1 à 6,
**caractérisé en ce que**
l'interrupteur est réalisé à réinitialisation automatique.

8. Luminaire selon l'une des revendications 1 à 7,
**caractérisé en ce que**
l'interrupteur est fermé par rotation du dispositif de centrage (BX) pour l'alimentation en tension d'une unité d'éclairage (G) du luminaire.

9. Luminaire selon l'une des revendications 1 à 8,
**caractérisé en ce que**
des diodes électroluminescentes (LED) sont prévues en tant qu'unité d'éclairage.
